# EUROPÄISCHE PATENTANMELDUNG

(11) **EP 3 919 350 A1**
(43) Veröffentlichungstag der Anmeldung: **08.12.2021**
(21) Anmeldenummer: 21177473.2
(22) Anmeldetag: 02.06.2021
(51) Int. Cl.: B62B 9/08

(54) **BETÄTIGUNGSSYSTEM UND BREMSSYSTEM**

(30) Priorität: 04.06.2020 DE 102020114922
(71) Anmelder: Emmaljunga Holding AB, 28268 Vittsjö (SE)
(72) Erfinder: Edvardsson, Joakim, 28143 Hässleholm (SE); de Graaff, Marc Geradus Jozef, 6229HW Maastricht (NL); Joosten, Alexander Johan Louis, 6041MJ Roermond (NL)
(74) Vertreter: Müller Schupfner & Partner Patent- und Rechtsanwaltspartnerschaft mbB

(57) **Zusammenfassung**

Betätigungssystem zur Betätigung eines Hebels, umfassend ein Betätigungselement mit einem ersten Betätigungsabschnitt und einem zweiten Betätigungsabschnitt, wobei der erste und der zweite Betätigungsabschnitt beabstandet voneinander am Betätigungselement ausgebildet sind, wobei das Betätigungselement einen Führungsbereich aufweist, in welchem es in einem Halteabschnitt an einer Halteeinheit derart verlagerbar geführt ist, dass eine Schwenkbewegung und/oder translatorische Bewegung des Betätigungselementes relativ zur Halteeinheit in einer Verlagerung der Betätigungsabschnitte entlang einer bogenförmigen oder geradlinigen Betätigungsbahn resultiert, wobei bei einer Verlagerung des Betätigungselements in Richtung einer ersten Stellung der erste Betätigungsabschnitt ausgelegt ist, eine Kraft auf den Hebel zu übertragen, um diesen in eine erste Hebelstellung zu bringen, wobei bei einer Verlagerung des Betätigungselements in Richtung einer zweiten Stellung der zweite Betätigungsabschnitt ausgelegt ist, eine Kraft auf den Hebel zu übertragen, um diesen in eine zweite Hebelstellung zu bringen, wobei das Betätigungssystem eine Positionseinheit aufweist, welche ausgelegt ist, das Betätigungselement in der/die erste(n) Stellung oder der/die zweite(n) Stellung oder eine(r) dazwischen liegende(n) Neutralstellung zu halten oder zu bringen.

## Beschreibung

Die vorliegende Erfindung betrifft ein Betätigungssystem und ein Bremssystem, insbesondere zum Einsatz in Transportfahrzeugen.

Betätigungssysteme zur Betätigung einer Bremse und entsprechende Bremssysteme an Transportfahrzeugen, insbesondere Kindertransportfahrzeugen, wie Kinderwagen oder Fahrradanhänger, sind aus dem Stand der Technik bereits bekannt. Dabei werden diese Systeme meist mit dem Fuß betätigt, was zum einen mitunter sehr hohe auf das Betätigungssystem und auch auf das Bremssystem wirkende Kräfte zur Folge hat, die eine Materialschädigung und damit den Ausfall des Betätigungssystems bewirken können. Zum anderen sind diese Betätigungs- und Bremssysteme oft nicht ergonomisch angeordnet, da sie im unteren Bereich der Achse des Transportfahrzeuges vorgesehen sind und mitunter nur unter verrenkten Bewegungen durch einen Benutzer erreichbar sind.

Aufgabe der vorliegenden Erfindung ist es, ein Betätigungssystem und ein mit diesem Betätigungssystem ausgestattetes Bremssystem bereitzustellen, welches zum einen eine Überlastung der entsprechenden, zueinander beweglichen Teile verhindert und zum anderen die Ergonomie der Betätigung einer Bremse verbessert.

Diese Aufgaben werden gelöst mit einem Betätigungssystem gemäß Anspruch 1 und einem Bremssystem gemäß Anspruch 15. Weitere vorteilhafte Ausbildungen der vorliegenden Erfindung ergeben sich aus den abhängigen Ansprüchen.

Erfindungsgemäß ist das Betätigungssystem zur Betätigung eines Hebels ausgelegt und umfasst ein Betätigungselement mit einem ersten Betätigungsabschnitt und einem zweiten Betätigungsabschnitt, wobei der erste und der zweite Betätigungsabschnitt beabstandet voneinander am Betätigungselement ausgebildet sind, wobei das Betätigungselement einen Führungsbereich aufweist, in welchem es in einem Halteabschnitt an einer Halteeinheit derart verlagerbar geführt ist, dass eine Schwenkbewegung und/oder translatorische Bewegung des Betätigungselementes relativ zur Halteeinheit in einer Verlagerung der Betätigungsabschnitte entlang einer bogenförmigen oder geradlinigen Betätigungsbahn resultiert, wobei bei einer Verlagerung des Betätigungselements in Richtung einer ersten Stellung der erste Betätigungsabschnitt ausgelegt ist, eine Kraft auf den Hebel zu übertragen, um diesen in eine erste Hebelstellung zu bringen, wobei bei einer Verlagerung des Betätigungselements in Richtung einer zweiten Stellung der zweite Betätigungsabschnitt ausgelegt ist, eine Kraft auf den Hebel zu übertragen, um diesen in eine zweite Hebelstellung zu bringen, wobei das Betätigungssystem eine Positionseinheit aufweist, welche ausgelegt ist, das Betätigungselement in der oder die erste(n) Stellung(en) oder in der/die zweite(n) Stellung(en) oder eine(r) dazwischenliegende Neutralstellung zu halten oder zu bringen. Das Betätigungselement ist vorzugsweise ein Adapterelement, welches mit Vorteil mit dem Fuß betätigt werden kann und von einer ersten Stellung in eine zweite Stellung und zurück verlagert werden kann. Das Betätigungselement ist dabei an einer Halteeinheit derart festgelegt, dass eine Verlagerung längs einer Betätigungsbahn möglich ist und Verlagerung in die übrigen Richtungen verhindert ist. Zur Festlegung an der Halteeinheit weist das Betätigungselement einen Führungsbereich auf, welcher in einem Halteabschnitt an der Halteeinheit derart verlagerbar geführt ist, dass das Betätigungselement und die Halteeinheit aneinander entlang gleiten können und somit die Verlagerung des Betätigungselementes mit geringem Kraftaufwand möglich ist. Weiterhin weist das Betätigungselement zwei Betätigungsabschnitte auf, die jeweils beabstandet voneinander, vorzugsweise einstückig und an der Innenseite des Betätigungselementes ausgebildet oder ausgeformt sind und welche dafür ausgelegt sind, einen Hebel eines Bremssystemes in eine erste Hebelstellung oder in eine zweite Hebelstellung zu verlagern. Dabei gelangt mit Vorteil jeweils nur einer der Betätigungsabschnitte zur selben Zeit mit dem Hebel in Eingriff. Eine Verlagerung des Betätigungselementes in Richtung einer ersten Stellung führt dabei dazu, dass der erste Bestätigungsabschnitt eine Kraft auf den Hebel übertragen kann, um diesen in die erste Hebelstellung zu bringen. Weiterhin führt bei einer entgegengesetzten Bewegung des Betätigungselementes in Richtung der zweiten Stellung dazu, dass der zweite Betätigungsabschnitt eine Kraft auf den Hebel übertragen kann, um diesen in dessen zweite Hebelstellung zu bringen. Weiterhin weist das Betätigungssystem eine Positionseinheit auf, welche eine Kraft zwischen der Halteeinheit und dem Betätigungselement etabliert, um das Betätigungselement in einer ersten Stellung oder in einer zweiten Stellung oder in einer dazwischen liegenden Neutralstellung relativ zur Halteeinheit zu halten oder das Betätigungselement entsprechend in eine dieser Stellungen zu bringen. Mit Vorteil weist das Betätigungselement eine Angriffsfläche auf, auf welcher ein Nutzer eine entsprechende Betätigungskraft auf das Betätigungselement übertragen kann, um dieses von der ersten Stellung in die zweite Stellung oder von der Neutralstellung in entweder die erste oder die zweite Stellung oder von der zweiten Stellung in Richtung der ersten Stellung zu verlagern.

Bevorzugt ist der zweite Betätigungsabschnitt ausgelegt, bei der Verlagerung des Betätigungselementes in Richtung der ersten Stellung und bei Vorliegen der Neutralstellung keine Kraft auf den Hebel zu übertragen, wobei der erste Betätigungsabschnitt ausgelegt ist, bei der Verlagerung des Betätigungselementes in Richtung der zweiten Stellung und bei Vorliegen der Neutralstellung keine Kraft auf den Hebel zu übertragen. Mit anderen Worten sind die Betätigungsabschnitte somit nicht am Hebel festgelegt oder formschlüssig unmittelbar mit diesem verbunden, sondern es ist jeweils vorgesehen, dass die Betätigungsabschnitte jeweils nur eine Kraft in einer Richtung auf den Hebel übertragen können und diesen somit in die erste bzw. in die zweite Hebelstellung schieben oder drücken können. Dieser Freilauf des Hebels relativ zum Betätigungselement sorgt dafür, dass für den Fall, dass keine Änderung der Lage des Betätigungselementes stattfindet, der Hebel frei von seiner ersten Hebelstellung in seine zweite Hebelstellung oder umgekehrt verlagerbar ist, ohne dass der jeweilige Betätigungsabschnitt des Betätigungselementes diese Verlagerungsbewegungen verhindert. Dies ist zum Beispiel vorteilhaft für den Fall, dass nicht nur das Betätigungselement zur Verlagerung des Hebels vorgesehen ist, sondern weitere beispielsweise elektrisch ausgelöste Systeme zur Verlagerung des Hebels am Transportfahrzeug ausgebildet sind und den Hebel unabhängig von der Stellung des Betätigungselementes verlagern können soll. Insbesondere bevorzugt ist das Betätigungselement dafür ausgelegt, stets in die Neutralstellung zurückzustreben, bei welcher der Hebel unabhängig von der Lage des Betätigungselementes sowohl in die erste Hebelstellung als auch in die zweite Hebelstellung verlagert werden kann, ohne dass dabei das Betätigungselement in seine erste oder zweite Stellung gebracht werden muss. Diese Entkopplung des Betätigungselementes vom Hebel sorgt dafür, dass hohe Kräfte, welche am Betätigungselement wirken, nicht unmittelbar auf den Hebel übertragen werden und somit der Hebel gegen Beschädigungen geschützt ist. Die Neutralstellung ist mit Vorteil dadurch gekennzeichnet, dass die Betätigungsabschnitte nicht am Hebel angreifen und besonders bevorzugt vom Hebel beabstandet sind.

Vorzugsweise weist die Halteeinheit zumindest einen ersten Stopp und einen zweiten stopp auf, wobei das Betätigungselement ausgelegt ist, in der ersten Stellung am ersten Stopp und in der zweiten Stellung am zweiten Stopp sich abstützend zur Anlage zu gelangen. Der erste Stopp und der zweite Stopp an der Halteeinheit sind insbesondere derart angeordnet, dass sich das Betätigungselement relativ zur Halteeinheit nur in einem definierten Rahmen bewegen kann, wobei dieser Rahmen derart ausgelegt ist, dass eine Beschädigung des Hebels oder eine Überbeanspruchung des Hebels verhindert wird.

Mit Vorteil weist die Positionseinheit zumindest ein elastisches Rückstellelement auf, welches ausgelegt ist, eine Rückstellkraft zwischen der Halteeinheit und dem Betätigungselement aufzubringen, welche das Betätigungselement in der Neutrallage hält. Die Positionseinheit ist in dieser Ausführungsform mit Vorteil dafür ausgelegt, das Betätigungselement jeweils von der ersten und von der zweiten Stellung aus zurück in die Neutrallage zu verlagern. Hierfür weist die Positionseinheit ein elastisches Rückstellelement auf, welches beispielsweise als Gummiblock oder Gummiband oder als Spiralfeder oder Blattfeder ausgelegt sein kann. Dabei ist das Rückstellelement vorzugsweise derart vorgespannt, dass die geringste Vorspannung in der Neutrallage des Betätigungselementes vorliegt, wobei zuverlässig von Auslenkungen aus dieser Neutrallage zurück in die Neutrallage eine Kraft auf das Betätigungselement übertragen wird.

Mit Vorteil ist das Rückstellelement als Federelement ausgebildet und dafür ausgelegt, einen Zug oder eine Druckkraft zwischen einem halteseitigen Angriffspunkt an der Halteeinheit und einem betätigungsseitigen Angriffspunkt an der Betätigungseinheit aufzubringen. Mit Vorteil ist also das Federelement in einer ersten dieser bevorzugten Ausführungsformen als Zugfeder ausgebildet, welche jeweils in einem halteseitigen Angriffspunkt an der Halteeinheit und in einem betätigungsseitigen Angriffspunkt an der Betätigungseinheit festgelegt ist. Alternativ hierzu kann das Federelement als Druckfeder ausgebildet sein, welche in einer entsprechenden Führungsaussparung entweder an der Halteeinheit oder am Betätigungselement ausgebildet ist und die Druckfeder aufnimmt, wobei der jeweils gegenüberliegende Angriffspunkt der Druckfeder an der jeweils anderen Einheit, Betätigungselement oder Halteeinheit, angreift. In einer ersten bevorzugten Ausführungsform sind dabei vier Druckfedern jeweils na zwei Seiten des Betätigungselementes vorgesehen, welche parallel oder entlang der Verlagerungsrichtung des Betätigungselementes eine Druckkraft aufbauen können, wobei jeweils zwei dieser vier Federelemente eine Verlagerung des Betätigungselementes in jeweils einer der beiden Richtungen zu verhindern suchen.

Mit Vorteil ist an der Halteeinheit oder am Betätigungselement eine Stützfläche ausgebildet, welche schräg zur vom Rückstellelement aufgebrachten Kraftrichtung steht, wobei sich das Rückstellelement, wenn sich das Betätigungselement außerhalb der Neutrallage befindet, an der Stützfläche derart abstützt, dass eine Zurückverlagerung des Rückstellelementes gemeinsam mit dem Betätigungselement in die Neutrallage verursacht wird, wobei die mittlere Erstreckung der Stützfläche im Wesentlichen einen Winkel von 30 bis 80° mit der Kraftrichtung, vorzugsweise von 45 bis 75° und bevorzugt von 45 bis 60° einschließt. Die Schrägstellung der Stützfläche sorgt dafür, dass die vom Rückstellelement auf die Stützfläche ausgeübte Rückstellkraft eine Kraftkomponente in Richtung der Verlagerungsrichtung des Betätigungselementes relativ zur Halteeinheit erzeugt. Mit anderen Worten ist die Stützfläche somit als geneigte Ebene relativ zur Kraftrichtung des Rückstellelementes ausgebildet, so dass der entsprechende Angriffskopf des Rückstellelementes an der Stützfläche entlanggleiten kann und somit das ansonsten entweder an der Halteeinheit oder am Betätigungselement festgelegte Rückstellelement eine Kraft längs der Verlagerungsrichtung des Betätigungselementes relativ zur Halteeinheit ausübt. Es versteht sich dabei, dass wenn eine Neutralstellung durch das Rückstellelement erreicht werden soll, zwei Stützflächen vorgesehen sind, welche in jeweils entgegengesetzter Schrägstellung zur Kraftrichtung des Rückstellelementes stehen, so dass eine Auslenkung des Betätigungselementes aus der Neutralstellung jeweils eine Kompression des Rückstellelementes und somit eine rückstellende Kraft verursacht, welche die beiden Teile wieder in eine Neutralstellung zurückzuversetzen sucht, in der das Rückstellelement seine größte Ausdehnung aufweist. Es hat sich dabei gezeigt, dass die Schrägstellung zum Beispiel einen Anstieg aufweisen kann, um eine besonders komfortable Zurückstellung des Betätigungselementes zu erreichen. Weiterhin kann die in der ersten Richtung wirkende Stützfläche eine andere Schrägstellung aufweisen als die in der zweiten Richtung wirkende Stützfläche, so dass unterschiedliche Rückstellkräfte bei einer Verlagerung des Betätigungselementes in einer ersten und in einer zweiten Richtung relativ zur Halteeinheit wirken, was beispielsweise dem Ausgleich des Eigengewichtes des Betätigungselementes und dem Nutzerkomfort zugutekommt.

Alternativ oder zusätzlich bevorzugt weist die Positionseinheit zumindest einen Elektromagneten auf, welcher ausgelegt ist, das Betätigungselement in seiner ersten Stellung oder in seiner zweiten Stellung oder in der Neutralstellung zu halten, wobei der Elektromagnet mit einem ferromagnetischen Materialabschnitt an der Halteeinheit oder am Betätigungselement wechselwirkt oder mit einem weiteren Elektromagnet der Positionseinheit. Alternativ oder zusätzlich zu elastischen Rückstellelementen kann ein Elektromagnet in das Material entweder des Betätigungselementes oder der Halteeinheit eingebracht und dort mit Vorteil formschlüssig und stoffschlüssig festgelegt sein. Durch die elektromagnetische Anziehungskraft des Elektromagneten mit entweder einem weiteren Elektromagneten oder mit ferromagnetischem Material am jeweils anderen Teil der Halteeinheit oder dem Betätigungselement wird das Betätigungselement in eine der bevorzugt vorgesehenen Stellungen gehalten. Es versteht sich, dass für mehrere Stellungen, also sowohl für die erste Stellung als auch die zweite Stellung als auch zusätzlich die Neutralstellung jeweils Paarungen von Elektromagneten mit einem weiteren Elektromagnet oder ferromagnetischem Material vorgesehen sein können, um in jeder dieser Stellungen ein Weiterverlagern des Betätigungselementes zumindest bis zu einer gewissen Grenze der angewandten Betätigungskräfte verhindert werden kann und gleichzeitig kontaktlos und somit verschleißfrei eine gewisse Positionssicherung des Betätigungselementes erreicht wird.

Alternativ oder zusätzlich bevorzugt weist die Positionseinheit zwei Sicherungsabschnitte auf, welche formschlüssig miteinander in und außer Eingriff bringbar sind, wobei einer der Sicherungsabschnitte am Betätigungselement und ein zweiter Sicherungsabschnitt an der Halteeinheit angeformt ist. Die Sicherungsabschnitte sorgen vorzugsweise für ein Einklipsen des Betätigungselementes an der Halteeinheit in einer der ausgewählten Stellungen. Weiterhin bevorzugt können die Sicherungsabschnitte als gerundete Ausformungen im Sinne eines Vorsprunges und/oder einer korrespondierenden Absenkung oder eines korrespondierenden Rücksprungs ausgebildet sein, derart, dass diese eine Hinterschneidung miteinander bilden, welche bis zu einer für einen Anwender komfortablen Betätigungskraft eine Verlagerung des Betätigungselementes relativ zur Halteeinheit verhindern. Dabei gleiten die Sicherungsabschnitte aneinander vorbei in Eingriff und können durch die Betätigungskraft des Anwenders auf das Betätigungselement wieder außer Eingriff gebracht werden. Der Eingriff der Sicherungsabschnitte ist dabei formschlüssig, was beispielsweise durch eine Vorsprung- und korrespondierenden Rücksprunggeometrie, oder zwei Vorsprünge oder beispielsweise durch einen klipsartigen Widerhaken erreicht werden kann.

Mit Vorteil ist die Halteeinheit an einer Achseinheit eines Transportfahrzeuges ausgebildet oder festgelegt, wobei die Halteeinheit zwei Halteschalen aufweist, welche demontierbar, festlegbar oder festgelegt sind und jeweils bereichsweise einen Halteabschnitt aufweisen, wobei die Halteschalen parallel zur Haupterstreckungsrichtung der Achseinheit versetzt zueinander an der Achseinheit oder an zumindest einem weiteren Element der Halteeinheit festlegbar oder festgelegt sind, so dass der Hebel zwischen den Halteschalen angeordnet ist. Die Halteeinheit formt mit Vorteil zumindest bereichsweise ein Gehäuse, welches die Achseinheit eines Transportfahrzeuges bereichsweise oder mit Vorteil vollständig umgibt. Dabei dient die Halteeinheit zum einen dem Schutz der Achseinheit und zum anderen der entsprechenden verlagerbaren Anordnung des Betätigungselementes oberhalb und im Bereich des Hebels an der Achseinheit. Die Halteeinheit weist hierfür vorzugsweise zwei Halteschalen auf, wobei die Halteschalen in einer besonderen Ausführungsform auch stoffschlüssig miteinander verbunden sein können oder gar in einem einstückigen Bauteil ausgebildet sein können. Die Halteschalen sind dabei vorzugsweise entlang der Haupterstreckungsrichtung der Achseinheit versetzt zueinander angeordnet und können somit den Hebel zwischen sich aufnehmen und entsprechend das Betätigungselement in diesem Bereich durch die an ihnen ausgebildeten Halteabschnitte verlagerbar festlegen. Vorzugsweise sind die Halteschalen als oberhalb der Achseinheit angeordnete schalenförmige Elemente ausgebildet, wobei diese mit einem weiteren schalenförmigen Bauteil der Halteeinheit, welches unterhalb der Achseinheit angeordnet ist, in formschlüssigen und kraftschlüssigen Eingriff gebracht werden können, so dass eine Demontage der Halteeinheit von der Achseinheit möglich bleibt.

Mit Vorteil ist das Betätigungselement schwenkbar um eine Schwenkachse an der Halteeinheit gelagert, wobei die Betätigungsbahn ein Kreisbogen um die Schwenkachse ist. In einer ersten bevorzugten Ausführungsform ist somit das Betätigungselement schwenkbar an der Halteeinheit festgelegt. Dabei ist eine Schwenkbewegung des Betätigungselements insbesondere platzsparend und kann auf einfache Weise durch Kippen des Fußes durch einen Anmelder durchgeführt werden. Die entsprechend an dem Betätigungselement einstückig ausgebildeten Betätigungsabschnitte beschreiben entsprechend bei der Verlagerung des Betätigungselementes eine kreisbogenförmige Bewegung entlang der Betätigungsbahn. Ein weiterer Vorteil der schwenkbaren Lagerung des Betätigungselementes an der Halteeinheit ist, dass eine besonders kompakte Lagerung mit besonders material- und platzsparenden Eingriffsabschnitten möglich ist. Im Gegensatz hierzu hat eine translatorische Verlagerbarkeit des Betätigungselementes relativ zur Halteeinheit den Vorteil, dass die entsprechenden Eingriffsgeometrien geradlinig ausgebildet sein können und somit besonders einfach herzustellen und nachzubearbeiten sind.

Mit Vorteil weist das Betätigungssystem einen Indikator auf, welcher ausgelegt ist, zumindest optisch das Vorliegen der zweiten Hebelstellung anzuzeigen, wobei der Indikator am Betätigungselement und/oder an der Halteeinheit festgelegt ist. Der Indikator ist vorzugsweise eine optische Hilfe für einen Anwender, um zu erkennen, dass sich der Hebel in der zweiten Hebelstellung befindet und somit die Räder des Transportfahrzeuges blockiert sind. Hierfür kann der Indikator sowohl am Betätigungselement als auch an der Halteeinheit festgelegt sein. Dabei signalisiert der Indikator zumindest optisch, also sichtbar für einen Anwender, das Vorliegen zumindest der zweiten Hebelstellung. Mit Vorteil versteht sich, dass der Indikator auch das Vorliegen der ersten Hebelstellung anzeigt. Zusätzlich zum optischen Anzeigen der jeweiligen Hebelstellung kann auch ein haptisches Anzeigen im Sinne von einer Geometrie, welche für den Anmelder leicht ertastbar ist und welche aus dem Betätigungssystem herausragt, vorgesehen sein.

Mit Vorteil weist der Indikator eine Aussparung im oder ein transparentes Material am Betätigungselement und in einer bevorzugten Ausführungsform eine am Hebel aufgebrachte Signalfarbe auf, wobei der Hebel in dessen zweiter Hebelstellung durch die Aussparung oder das transparente Material hindurch sichtbar ist. In einer ersten bevorzugten Ausführungsform kann dabei der Hebel aus farbigem und gut erkennbarem Material ausgebildet sein. Alternativ oder zusätzlich kann am Hebel eine Signalfarbe aufgebracht, wobei beispielsweise Rot verwendet wird, um zu signalisieren, dass die Bremse eingelegt und die Räder entsprechend blockiert sind. In dem Zustand, in dem der Hebel durch den Indikator hindurch in seiner zweiten Hebelstellung sichtbar ist, ist dieser durch den Indikator hindurch sichtbar und signalisiert dem Anwender, dass die Bremse aktiviert ist. Es versteht sich, dass der Indikator in der ersten Hebelstellung des Hebels durch eine in einem entsprechenden Materialbereich am Betätigungssystem vorgesehene, weitere Signalfarbe, beispielsweise grün, auch signalisieren kann, dass die erste Hebelstellung vorliegt.

Besonders bevorzugt umfasst der Indikator ein Leuchtmittel, welches bei Vorliegen der zweiten Hebelstellung in einer ersten Farbe leuchtet und bei Vorliegen der ersten Hebelstellung aus ist oder in einer zweiten Farbe leuchtet. Das Leuchtmittel ist vorzugsweise eine LED, welche einen geringen Energie- und Platzbedarf aufweist. Mit Vorteil sind zwei Leuchtmittel vorgesehen, von denen jeweils eines in einer ersten Signalfarbe und ein zweites in einer zweiten Signalfarbe leuchtet, um jeweils das Vorliegen der ersten oder der zweiten Hebelstellung anzuzeigen. Mit Vorteil sind die Leuchtmittel dabei an das Energiesystem des Transportfahrzeuges angeschlossen oder weisen einen eigenen Energiespeicher auf.

Erfindungsgemäß ist ein Bremssystem eines Transportfahrzeuges, insbesondere eines Kindertransportfahrzeuges, vorgesehen, welches einen Hebel und ein Betätigungssystem mit den zuvor beschriebenen Merkmalen aufweist, wobei der Hebel in der ersten Hebelstellung den Freilauf zumindest eines Rades des Transportfahrzeuges zulässt und in seiner zweiten Hebelstellung zumindest ein Rad des Transportfahrzeuges bremst oder blockiert, wobei die Halteeinheit formschlüssig an einer Achse des Transportfahrzeuges festlegbar oder festgelegt ist und im Bereich des Hebels eine Aussparung aufweist, in welcher das Betätigungselement verlagerbar gelagert ist. In den Betätigungssystemen selbst ist auch ein Bremssystem Gegenstand der vorliegenden Erfindung, welches an einem Transportfahrzeug, insbesondere einem Kindertransportfahrzeug, wie einem Kinderwagen oder einem Fahrradanhänger, zum Einsatz kommt. Der Hebel des Bremssystems weist dabei eine mechanische oder elektrische Verbindung zu einem Brems- oder Blockiersystem auf, welches zumindest ein Rad des Transportfahrzeuges bremst, blockiert oder den Freilauf dieses Rades zulässt. Mit Vorteil ist das Transportfahrzeug dabei ein angetriebenes und/oder selbstfahrendes Fahrzeug mit einem vorzugsweise elektrischen Antrieb. Insbesondere bei solchen elektrisch betriebenen Transportfahrzeugen kann die vorliegende Erfindung ihre technischen Vorteile entfalten, da hier die Entkopplung und nur zeitweise Verbindung der mechanischen Bremsbetätigung durch das Betätigungselement und des Bremsmechanismus' selbst, eine parallel stattfindende elektrische Ansteuerung der Bremse zulässt. Das Betätigungssystem erlaubt es dabei, dass die Bremse und damit der Hebel ferngesteuert in verschiedene Zustände gebracht werden, ohne dass dabei Komponenten des Betätigungssystems mitbewegt werden müssen. Gemäß den zuvor beschriebenen Merkmalen weist das Bremssystem ein Betätigungssystem auf, welches zur ergonomischen und Ausfallsicherungsbetätigung des Hebels des Bremssystems ausgebildet ist.

Weitere Vorteile und Merkmale der vorliegenden Erfindung ergeben sich aus der nachfolgenden Beschreibung mit Bezug auf die beigefügten Figuren.

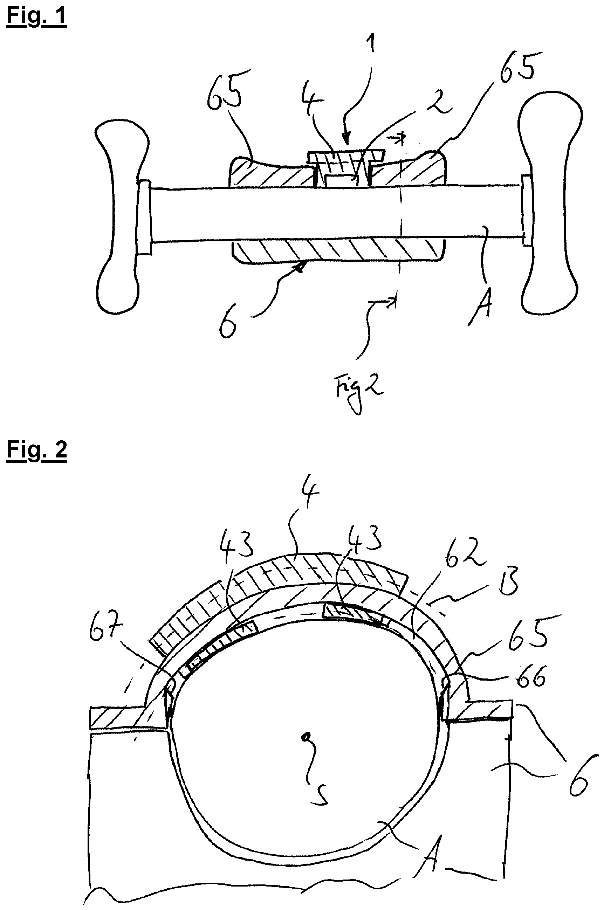

Figur 1 zeigt eine schematische Ansicht einer Ausführungsform des erfindungsgemäßen Bremssystems, wobei insbesondere die Achseinheit A mit zwei daran angeordneten Rädern gezeigt ist und wobei an der Achseinheit A eine Ausführungsform des erfindungsgemäßen Betätigungssystems 1 angeordnet und festgelegt ist. Das Bremssystem weist einen Hebel 2 auf, welcher in eine erste Hebelstellung H₁ und in eine zweite Hebelstellung H₂ versetzt werden kann, wobei in der ersten Hebelstellung H₁ die gezeigten Räder nicht vom Bremssystem gebremst werden und wobei in der zweiten Hebelstellung H₂ die Räder gegen Rotation relativ zur Achseinheit A blockiert sind. Zum Ansteuern des Hebels 2 und Verlagern in die erste oder zweite Hebelstellung H₁, H₂ ist ein Betätigungselement 4 vorgesehen, welches an einer Halteeinheit 6 verlagerbar angeordnet und festgelegt ist. Hierfür ist die Halteeinheit 6 formschlüssig und demontierbar an der Achseinheit A des Bremssystems festgelegt. Dabei weist die Halteeinheit 6 zwei Halteschalen 65 auf, welche jeweils rechts und links des Betätigungselementes 4 angeordnet sind und lösbar mit einem unteren Bauteil der Halteeinheit 6 in Eingriff stehen.

Fig. 2 zeigt die in Fig. 1 gekennzeichnete Schnittansicht, wobei insbesondere der Bereich, in welchem das Betätigungselement 4 verlagerbar an der Halteeinheit 6 angeordnet ist, geschnitten dargestellt ist. In diesem Bereich weist die Halteeinheit 6 einen Halteabschnitt 52 auf, welcher insbesondere spaltförmig ausgebildet ist und von der Halteeinheit 6 gemeinsam mit der Achseinheit A gebildet wird. In diesem Halteabschnitt 62 sind im vorliegenden Ausführungsbeispiel zwei Führungsbereiche 43 des Betätigungselementes 4 angeordnet und können innerhalb des Halteabschnitts 62 entlang der Betätigungsbahn B oder parallel zur Betätigungsbahn B verschoben bzw. verlagert werden. Es lässt sich somit das Betätigungselement 4 relativ zur Halteeinheit 6 ausschließlich parallel zur Betätigungsbahn B verlagern. Weiterhin ist gezeigt, dass an der Halteeinheit 6 ein erster Stopp 66 und ein zweiter Stopp 67 angeordnet sind, wobei insbesondere die Führungsbereiche 43 des Betätigungselementes 4 in diesem bevorzugten Ausführungsbeispiel an dem jeweiligen Stopp 66, 67 zur sich abstützenden Anlage gelangen sobald die erste Stellung E oder die zweite Stellung Z durch das Betätigungselement 4 erreicht ist. Weiterhin ist gezeigt, dass der Halteabschnitt 62 eine Führung des Betätigungselementes 4 vorgibt, dass dieses schwenkbar um die Schwenkachse S an der Halteeinheit 6 festgelegt ist.

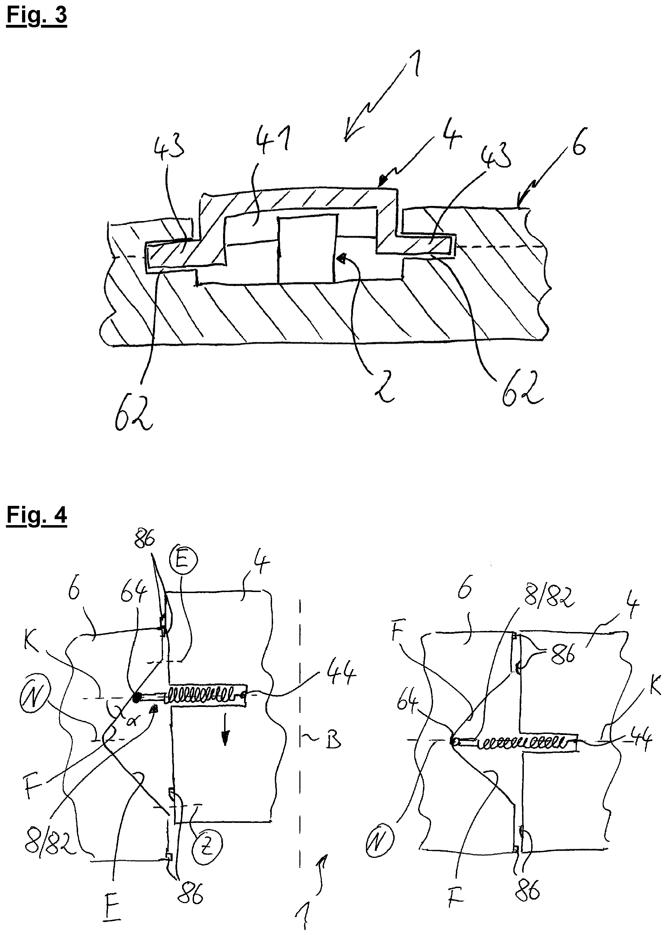

Fig. 3 zeigt eine weitere Ansicht einer bevorzugten Ausführungsform des erfindungsgemäßen Betätigungssystems 1, wobei diesmal die Schnittebene senkrecht zur in Fig. 2 gezeigten Schnittebene liegt. Erkennbar ist dabei der Schnitt durch die beiden Führungsbereiche 43 des Betätigungselementes 4, welche innerhalb der Halteabschnitte 62 der Halteeinheit 6 angeordnet und dort gegen Verlagerungen in alle Raumrichtungen außer gegen Verlagerung längs der Betätigungsbahn B gesichert sind. Weiterhin ist der Blick auf den ersten Betätigungsabschnitt 41 frei, welcher in dieser Ansicht hinter dem Hebel 2 liegt. Die Halteeinheit 6 ist in dieser Ansicht nur sehr schematisch dargestellt, wobei gestrichelt eine Teilungsebene der mit Vorteil mehrteiligen Halteeinheit 6 gezeigt ist.

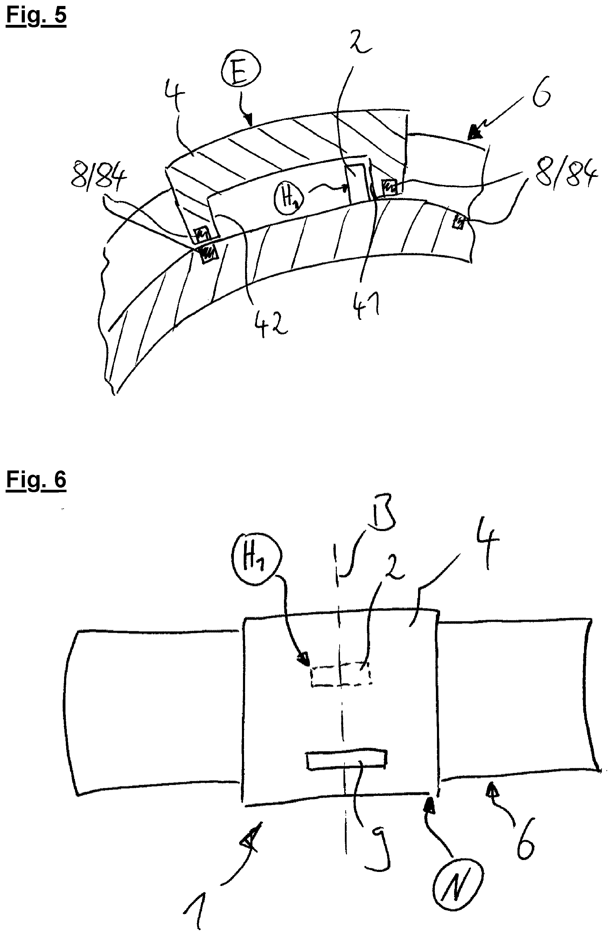

Fig. 4 zeigt zwei schematische Ansichten eines Betätigungssystems in zwei Zuständen bzw. zwei Stellungen, wobei am Betätigungssystem 1 zwei Varianten einer Positionseinheit 8 gezeigt sind. Zum einen ist die Variante der Positionseinheit 8 gezeigt, bei welcher diese vorzugsweise zwei (davon nur eines gezeigt) Rückstellelemente 82 aufweist. Das Rückstellelement 82 ist entsprechend in einer Führungsaussparung am Betätigungselement 4 gelagert und gegen Verschwenkung gesichert und greift in einem betätigungsseitigen Angriffspunkt 44 am Betätigungselement 4 an und in einem halteseitigen Angriffspunkt 64 an der Halteeinheit 6, und dabei insbesondere an der an der Halteeinheit 6 ausgebildeten Stützfläche F an. Die gezeigten Stützflächen F weisen dabei eine Schrägstellung mit einem Winkel α zur Kraftrichtung K des Rückstellelementes 82 auf. Hierdurch wird in der links gezeigten Stellung des Betätigungselementes 4 relativ zur Halteeinheit 6 eine nach unten wirkende Kraft durch das Rückstellelement 82 auf das Betätigungselement 4 übertragen, so dass dieses Betätigungselement 4 in der mit einem Pfeil gekennzeichneten Richtung verlagert wird. Die rechts gezeigte Darstellung in Fig. 4 zeigt dabei den Zustand, in welchem das Betätigungselement 4 in seiner Neutralstellung N angelangt ist und das Rückstellelement 82 seine größte Erstreckung längs der Kraftrichtung K aufweist. Alternativ oder zusätzlich zu der Ausführungsform der Positionseinheit 8 mit Rückstellelement 82 ist auch eine Positionseinheit 8 mit Sicherungsabschnitten 86 vorgesehen. Die Sicherungsabschnitte 86 stellen im vorliegenden Ausführungsbeispiel Vorsprünge dar, welche sowohl am Betätigungselement 4 als auch an der Halteeinheit 6 angeordnet sind und entsprechend eine temporäre Sicherung des Betätigungselementes 4 in der ersten Stellung E oder in der zweiten Stellung Z relativ zur Halteeinheit 6 gewährleisten können. Im vorliegenden Beispiel sind beide Ausführungsformen der Positionseinheit 8 kombiniert, so dass, sobald der Formschluss der beiden oberhalb des Rückstellelementes 82 angeordneten Sicherungsabschnitte 86 überwunden wurde, das Rückstellelement 82 das Betätigungselement 4 in Richtung der Neutralstellung N verlagert. Fig. 5 zeigt eine weitere bevorzugte Ausführungsform der Positionseinheit 8, wobei hier zumindest ein Elektromagnet 84 zum Einsatz gelangt, welcher im vorliegenden Ausführungsbeispiel mit jeweils gegenüberliegenden Elektromagneten 84 in Wechselwirkung tritt, um das Betätigungselement 4 beispielsweise in der in Fig. 5 dargestellten ersten Stellung E zu sichern. Es versteht sich, dass die Positionseinheit 8 mit Elektromagneten 84 beispielsweise auch eine Schwenkbewegung des Betätigungselementes 4 relativ zur Halteeinheit 6 in jeweils einer der beiden Stellungen (erste Stellung E oder zweite Stellung Z) sichern kann, nämlich dann, wenn die gegenüberliegenden Elektromagnete 84 möglichst nah aneinander gebracht werden, so dass eine starke elektromagnetische Anziehungskraft das Betätigungselement 4 in der jeweiligen Stellung hält. Bei der in Fig. 5 dargestellten Ausführungsform ist der Hebel 2 bereits in die erste Hebelstellung H₁ verlagert. Es ist dabei sowohl der erste Betätigungsabschnitt 41 als auch der zweite Betätigungsabschnitt 42 außer Eingriff mit dem Hebel.

Fig. 6 zeigt eine Ausführungsform des erfindungsgemäßen Betätigungssystems 1, bei welcher am Betätigungselement 4 ein Indikator 9 angeordnet ist. Dargestellt ist der Indikator 9, welcher als Aussparung oder als transparenter Bereich an der Oberseite des Betätigungselementes 4 vorgesehen ist. In der in Fig. 6 gezeigten ersten Hebelstellung H1 des Hebels 2 ist dieser nicht in der Aussparung sichtbar, so dass ein Anwender im vorliegenden Fall erkennen kann, dass die Bremse des Bremssystems nicht aktiviert ist. Dabei befindet sich das Betätigungselement 4 in seiner Neutralstellung N.

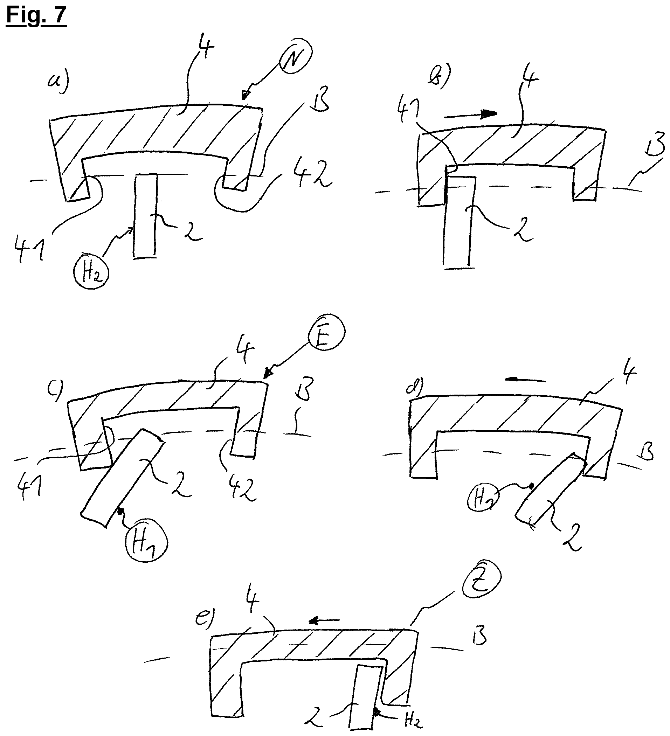

Fig. 7 schließlich zeigt eine schematische Ansicht des Ablaufes der Betätigung des Hebels 2 durch das Betätigungselement 4. Im Zustand a) befindet sich das Betätigungselement 4 in seiner Neutralstellung N, wobei weder der erste noch der zweite Betätigungsabschnitt 41, 42 in Eingriff mit dem Hebel 2 gelangen. Der Hebel 2 befindet sich in seiner zweiten Hebelstellung H₂, wobei die Räder des Transportsystems in dieser Stellung blockiert sind, also Bremswirkung vorliegt. Wird nun das Betätigungselement 4 in der in Ansicht b) gezeigten Richtung verlagert, gelangt der erste Betätigungsabschnitt 41 mit dem Hebel 2 in Eingriff, wobei der Hebel 2 bei weiterer Verlagerung in den in Ansicht c) gezeigten Zustand in seine erste Hebelstellung H₁ verlagert wird. In Ansicht c) liegt dabei das Betätigungselement 4 in seiner ersten Stellung vor, wobei der Hebel 2 in seiner ersten Hebelstellung H₁ angeordnet ist. Wird nun, wie in Ansicht d) gezeigt, das Betätigungselement 4 nach links verlagert oder geschwenkt, so gelangt der zweite Betätigungsabschnitt 42 mit dem Hebel 2 in Eingriff und verlagert diesen von der in Ansicht d) gezeigten ersten Hebelstellung H₁ in die in Ansicht e) gezeigte zweite Hebelstellung H₂ zurück. In dem in Ansicht e) gezeigten Zustand liegt das Betätigungselement 4 in seiner zweiten Stellung Z vor. Von dort aus kann es wieder zurück in die Neutralstellung N von Ansicht a) verlagert werden.

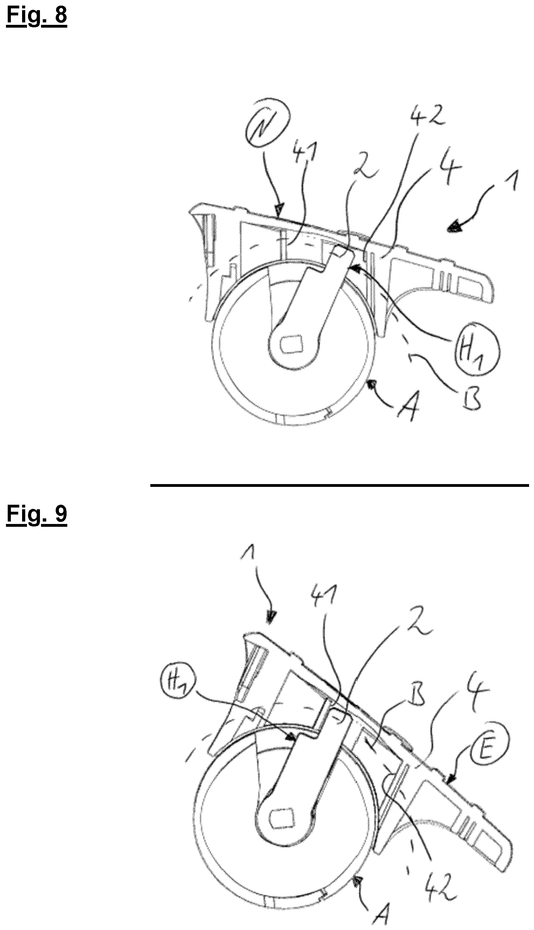

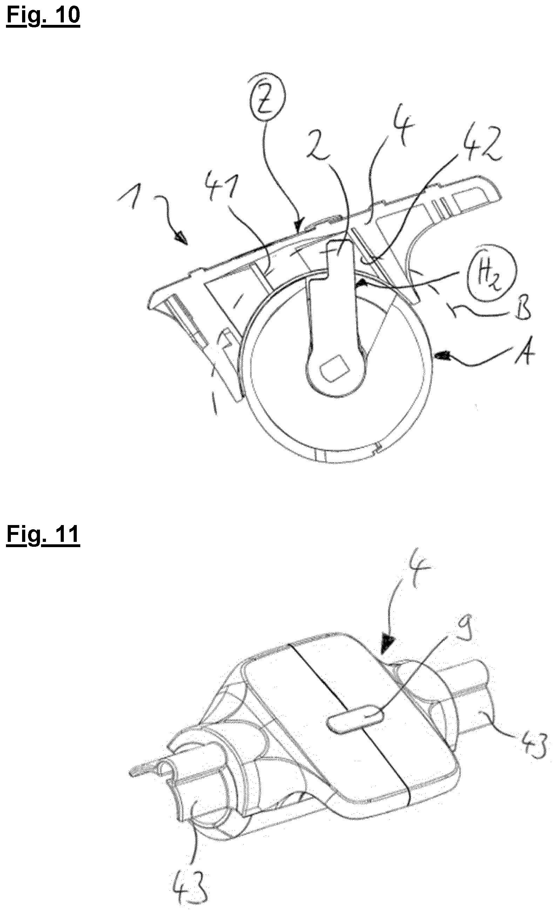

Figuren 8 - 11 zeigen verschiedene Zustände einer weiteren bevorzugten Ausführungsform eines erfindungsgemäßen Betätigungssystems 1. Die Schnittansichten der Figuren 8 - 10 zeigen das Betätigungssystem 1 auf Höhe des Hebels 2 und senkrecht zur Achse des Kindertransportfahrzeuges geschnitten. Das Betätigungselement 4 ist in Fig. 8 in seiner Neutralstellung N gezeigt, in welcher keiner der Betätigungsabschnitte 41, 42 in Kontakt mit dem Hebel 2 steht und bevorzugt vom Hebel 2 beabstandet sind. Der Hebel 2 ist in seiner ersten Hebelstellung H₁ gezeigt, wobei er, während das Betätigungselement 4 in der Neutralstellung N ist, alternativ auch in der in Fig. 10 gezeigten zweiten Hebelstellung H₂ angeordnet sein könnte. In dieser Ausführungsform ist der Hebel 2 vorzugsweise rotierend um die Radachse des Kindertransportfahrzeuges aufgehängt und verschwenkbar zwischen seiner ersten Hebelstellung H₁ (Fig. 8 und 9) und seiner zweiten Hebelstellung H₂ (Fig. 10) an der Achseinheit A festgelegt.

Fig. 9 zeigt das Betätigungselement 4 in der ersten Stellung E, in welcher der erste Stützabschnitt 41 am Hebel 2 angreift, um diesen in der ersten Hebelstellung H₁ zu halten oder in diese zu verlagern. Fig. 10 zeigt das Betätigungselement 4 in der zweiten Stellung Z, in welcher der zweite Stützabschnitt 42 am Hebel 2 angreift, um diesen in der zweiten Hebelstellung H₂ zu halten oder in diese zu verlagern. Zwischen der ersten und der zweiten Stellung E, Z befindet sich in dieser bevorzugten Ausführungsform die Neutralstellung N des Betätigungselements 4, wobei sich die Stützabschnitte 41, 42 von der ersten Stellung E zur zweiten Stellung Z und umgekehrt entlang einer Betätigungsbahn B verlagern.

Fig. 10 zeigt eine perspektivische Ansicht des Betätigungselements der zuvor beschriebenen Ausführungsformen. Mit den gerundeten, seitlichen Führungsabschnitten 43 lässt sich das Betätigungselement 4 längs der Betätigungsbahn B verlagerbar an der Achseinheit A anordnen, wobei die in den Figuren 1 - 3 gezeigte Lagereinheit 6 entsprechend zur Führung des Betätigungselements 4 in dieser Ausführungsform zum Einsatz gelangen kann. Die zylinderförmigen Abschnitte im Bereich der Führungsabschnitte 43 sind mit Vorteil für die Aufnahme jeweils einer Positionseinheit 8, wie beispielsweise in Fig. 4 gezeigt, ausgelegt.

**Bezugszeichen:**

| | | |
|---|---|---|
| 1 | - | Betätigungssystem |
| 2 | - | Hebel |
| 4 | - | Betätigungselement |
| 6 | - | Halteeinheit |
| 8 | - | Positionseinheit |
| 9 | - | Indikator |
| 41 | - | erster Betätigungsabschnitt |
| 42 | - | zweiter Betätigungsabschnitt |
| 43 | - | Führungsbereich |
| 44 | - | betätigungsseitiger Angriffspunkt |
| 62 | - | Halteabschnitt |
| 64 | - | halteseitiger Angriffspunkt |
| 65 | - | Halteschalen |
| 66 | - | erster Stopp |
| 67 | - | zweiter Stopp |
| 82 | - | Rückstellelement |
| 84 | - | Elektromagnet |
| 86 | - | Sicherungsabschnitt |
| A | - | Achseinheit |
| B | - | Betätigungsbahn |
| E | - | erste Stellung |
| F | - | Stützfläche |
| H₁ | - | erste Hebelstellung |
| H₂ | - | zweite Hebelstellung |
| K | - | Kraftrichtung |
| N | - | Neutralstellung |
| S | - | Schwenkachse |
| Z | - | zweite Stellung |

## Patentansprüche

1. Betätigungssystem (1) zur Betätigung eines Hebels (2),
umfassend ein Betätigungselement (4) mit einem ersten Betätigungsabschnitt (41) und einem zweiten Betätigungsabschnitt (42),
wobei der erste und der zweite Betätigungsabschnitt (41, 42) beabstandet voneinander am Betätigungselement (4) ausgebildet sind,
wobei das Betätigungselement (4) einen Führungsbereich (43) aufweist, in welchem es in einem Halteabschnitt (62) an einer Halteeinheit (6) derart verlagerbar geführt ist, dass eine Schwenkbewegung und/oder translatorische Bewegung des Betätigungselementes (4) relativ zur Halteeinheit (6) in einer Verlagerung der Betätigungsabschnitte (41, 42) entlang einer bogenförmigen oder geradlinigen Betätigungsbahn (B) resultiert,
wobei bei einer Verlagerung des Betätigungselements (4) in Richtung einer ersten Stellung (E) der erste Betätigungsabschnitt (41) ausgelegt ist, eine Kraft auf den Hebel (2) zu übertragen, um diesen in eine erste Hebelstellung (H₁) zu bringen,
wobei bei einer Verlagerung des Betätigungselements (4) in Richtung einer zweiten Stellung (Z) der zweite Betätigungsabschnitt (42) ausgelegt ist, eine Kraft auf den Hebel (2) zu übertragen, um diesen in eine zweite Hebelstellung (H₂) zu bringen,
wobei das Betätigungssystem (1) eine Positionseinheit (8) aufweist, welche ausgelegt ist, das Betätigungselement (4) in der/die erste(n) Stellung (E) oder der/die zweite(n) Stellung (Z) oder eine(r) dazwischen liegende(n) Neutralstellung (N) zu halten oder zu bringen.

2. Betätigungssystem (1) nach Anspruch 1,
wobei die Neutralstellung (N) des Betätigungselementes (4) **dadurch gekennzeichnet ist, dass** die Betätigungsabschnitte (41, 42) nicht am Hebel (2) angreifen und bevorzugt vom Hebel (2) beabstandet sind.

3. Betätigungssystem (1) nach Anspruch 1 oder 2,
wobei der zweite Betätigungsabschnitt (42) ausgelegt ist, bei der Verlagerung des Betätigungselements (4) in Richtung der ersten Stellung (E) und bei Vorliegen der Neutralstellung (N), keine Kraft auf den Hebel (2) zu übertragen,
wobei der erste Betätigungsabschnitt (41) ausgelegt ist, bei der Verlagerung des Betätigungselements (4) in Richtung der zweiten Stellung (Z) und bei Vorliegen der Neutralstellung (N), keine Kraft auf den Hebel (2) zu übertragen.

4. Betätigungssystem (1) nach einem der vorhergehenden Ansprüche,
wobei die Halteeinheit (6) zumindest einen ersten Stopp (66) und zumindest einen zweiten Stopp (67) aufweist,
wobei das Betätigungselement (4) ausgelegt ist, in der ersten Stellung (E) am ersten Stopp (66) und in der zweiten Stellung (Z) am zweiten Stopp (67) sich abstützend zur Anlage zu gelangen.

5. Betätigungssystem (1) nach einem der vorhergehenden Ansprüche,
wobei die Positionseinheit (8) zumindest ein elastisches Rückstellelement (82) aufweist, welches ausgelegt ist, eine Rückstellkraft zwischen der Halteeinheit (6) und dem Betätigungselement (4) aufzubringen, welche das Betätigungselement (4) in der Neutralstellung (N) hält.

6. Betätigungssystem (1) nach Anspruch 5,
wobei das Rückstellelement (82) als Federelement ausgebildet und dafür ausgelegt ist, eine Zug- oder eine Druckkraft zwischen einem halteseitigen Angriffspunkt (64) an der Halteeinheit (6) und einem betätigungsseitigen Angriffspunkt (44) an dem Betätigungselement (4) aufzubringen.

7. Betätigungssystem (1) nach einem der Ansprüche 5 oder 6,
wobei an der Halteeinheit (6) oder am Betätigungselement (4) eine Stützfläche (F) ausgebildet ist, welche schräg zur vom Rückstellelement (82) aufgebrachten Kraftrichtung (K) steht,
wobei sich das Rückstellelement (82), wenn sich das Betätigungselement (4) außerhalb der Neutralstellung (N) befindet, an der Stützfläche (F) abstützt, wobei die mittlere Erstreckung der Stützfläche (F) im Wesentlichen einen Winkel von 30° bis 80° mit der Kraftrichtung (K), vorzugsweise von 45° - 75°, und besonders bevorzugt von 45° - 60° einschließt.

8. Betätigungssystem (1) nach einem der Ansprüche 5 bis 7,
wobei die Positionseinheit (8) zumindest einen Elektromagnet (84) aufweist, welcher ausgelegt ist, das Betätigungselement (4) in seiner ersten Stellung (E), oder in seiner zweiten Stellung (Z), oder in der Neutralstellung (N) zu halten,
wobei der Elektromagnet (84) mit einem ferromagnetischen Materialabschnitt an der Halteeinheit (6) oder dem Betätigungselement (4) wechselwirkt, oder mit einem weiteren Elektromagneten (84) der Positionseinheit (8).

9. Betätigungssystem (1) nach einem der Ansprüche 5 bis 8,
wobei die Positionseinheit (8) zumindest zwei Sicherungsabschnitte (86) aufweist, welche formschlüssig miteinander in und außer Eingriff bringbar sind,
wobei einer der Sicherungsabschnitte (86) am Betätigungselement (4) und ein zweiter Sicherungsabschnitt (86) an der Halteeinheit (6) angeformt ist.

10. Betätigungssystem (1) nach einem der vorhergehenden Ansprüche, wobei die Halteeinheit (6) an einer Achseinheit (A) eines Transportfahrzeuges ausgebildet oder festgelegt ist,
wobei die Halteeinheit (6) zwei Halteschalen (65) aufweist, welche demontierbar festlegbar oder festgelegt sind und jeweils bereichsweise einen Halteabschnitt (62) aufweisen,
wobei die Halteschalen (65) parallel zur Haupterstreckungsrichtung der Achseinheit (A) versetzt zueinander an der Achseinheit (A) oder an zumindest einem weiteren Element der Halteeinheit (6) festlegbar oder festgelegt sind, so dass der Hebel (2) zwischen den Halteschalen (65) angeordnet ist.

11. Betätigungssystem (1) nach einem der vorhergehenden Ansprüche,
wobei das Betätigungselement (4) schwenkbar um eine Schwenkachse (S) an der Halteeinheit (6) gelagert ist,
wobei die Betätigungsbahn (B) ein Kreisbogen um die Schwenkachse (S) ist.

12. Betätigungssystem (1) nach einem der vorhergehenden Ansprüche,
aufweisend einen Indikator (9) welcher ausgelegt ist, zumindest optisch zumindest das Vorliegen der zweiten Hebelstellung (H₂) anzuzeigen,
wobei der Indikator (9) am Betätigungselement (4) und/oder an der Halteeinheit (6) festgelegt ist.

13. Betätigungssystem (1) nach Anspruch 12,
wobei der Indikator (9) eine Aussparung im oder ein transparentes Material am Betätigungselement (4) umfasst,
wobei der Hebel (2) in dessen zweiter Hebelstellung (H₂) durch die Aussparung oder das transparente Material hindurch sichtbar ist.

14. Betätigungssystem (1) nach Anspruch 12,
wobei der Indikator (9) ein Leuchtmittel umfasst, welches bei Vorliegen der zweiten Hebelstellung (H₂) in einer ersten Farbe leuchtet und bei Vorliegen der ersten Hebelstellung (H₁) nicht oder in einer zweiten Farbe leuchtet.

15. Bremssystem eines Transportfahrzeuges, insbesondere eines Kindertransportfahrzeuges, aufweisend einen Hebel (2) und ein Betätigungssystem (1) nach einem der Ansprüche 1 - 14,
wobei der Hebel (2) in der ersten Hebelstellung (H₁) den Freilauf zumindest eines Rades des Transportfahrzeugs zulässt und in seiner zweiten Hebelstellung (H₂) zumindest ein Rad des Transportfahrzeuges bremst,
wobei die Halteeinheit (6) formschlüssig an einer Achseinheit (A) des Transportfahrzeugs festlegbar oder festgelegt ist und im Bereich des Hebels (2) eine Aussparung aufweist, in welcher das Betätigungselement (4) verlagerbar gelagert ist.
